(19) **Europäisches Patentamt / European Patent Office / Office européen des brevets**

(11) **EP 2 634 953 A1**

(12) # EUROPEAN PATENT APPLICATION

(43) Date of publication:
**04.09.2013 Bulletin 2013/36**

(51) Int Cl.:
**H04L 9/00** *(2006.01)*

(21) Application number: **12305258.1**

(22) Date of filing: **02.03.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (71) Applicant: **Gemalto SA**<br>**92190 Meudon (FR)**<br><br>(72) Inventor: **Debraize, Blandine**<br>**92190 MEUDON (FR)** |

(54) **Countermeasure method against side channel analysis for cryptographic algorithms using boolean operations and arithmetic operations**

(57) The present invention relates to a countermeasure method against side channel analysis for cryptographic algorithm using Boolean operations and arithmetic operation. To protect a cryptographic algorithm combining Boolean and arithmetic instructions against first order side channel analysis, it is necessary to perform conversions between Boolean masking and arithmetic masking. The present invention proposes a new conversion method from arithmetic masking to Boolean masking, using only one pre-computed table T. Said table T being configured so that to convert from arithmetic to Boolean masking k-bit nibble by k-bit nibble for integers having a size greater than k bits while adding a masked carry from the modular addition to the nibble.

EP 2 634 953 A1

**Description**

## FIELD OF THE INVENTION

The present invention relates to a countermeasure method against side channel analysis for cryptographic algorithms using Boolean operations and arithmetic operation, and electronic device embedding such countermeasure method.

The method of the invention is particularly suitable in applications where access to services or data is strictly controlled.

## BACKGROUND OF THE INVENTION

Paul Kocher et al. [1] published in 1999 the concept of "Differential Power Analysis," also known as DPA. The principle of these DPA attacks is based on the fact to retrieve information about a secret key of an algorithm implemented in an embedded device by analyzing the power consumption curves generated by the device during the execution of this algorithm. The initial targets were symmetric cryptosystems such as the Data Encryption Standard (DES), Advanced Encryption Standard (AES) candidates or public-key cryptosystems. The principles of those attacks are extended to some other techniques such as Correlation Power Analysis, Electromagnetic Analysis and so on. All these attacks relying on physical leakage are more generically called side channel attacks.

Countermeasures were soon developed to thwart those attacks. Generic countermeasures have been suggested in 1999 by Chari et al. [2] and by Louis Goubin et al [3]. Those generic countermeasures consist in splitting all key-dependant intermediate variables processed during the execution of the algorithm into several shares.

The value of each share, considered independently from the other ones, is randomly distributed and independent from the value of the secret key. Therefore, the power leakage of the share does not reveal any secret information.

It is disclosed by Chari et al. [2] in 2001 that the number of power curves needed to mount an attack grows exponentially with the number of shares. When only two shares are used, the method comes to masking all intermediate data with a random. In this case it is said that the implementation is protected against first order DPA.

Those general methods generally sharply increase the amount of memory or the computation time required, as noted by Chari et al. Furthermore, it has been demonstrated that even the intermediate steps can be attacked by DPA, so the separation of the variables must be performed in every step of the algorithm. This makes the question of additional memory and computation time even more crucial, particularly for embedded systems such as smart cards.

For algorithms that combine Boolean and arithmetic operations, two different kinds of masking must be used: Boolean masking and arithmetic masking. A large number of algorithms have this shape: hash functions of the SHA-1 family, two of the finalists of the SHA-3 competition (Blake and Skein), all software oriented finalists of the eSTREAM stream cipher competition, other stream ciphers like Snow 2.0 and Snow 3G, the block cipher IDEA.....

The security of DPA-protected implementations of such ciphers strongly depends on the security of conversions between arithmetic and Boolean masking in both directions.

It is known the document US 7 334 133 which disclosed a secure conversion algorithm between arithmetic and Boolean masking in both directions. But the conversion of arithmetic to Boolean method proposed in this document is not very efficient and can be a bottleneck in some implementations.

It is disclosed by Coron et al. [5] in 2003 and in the document EP 1 348 275 a conversion algorithm between arithmetic to Boolean masking. This method is based on the use of two pre-computed tables when the size of the data is greater than k where k is the size of the processed data. Each table has size $2^k$. The value of k is typically 4. In this case a 32-bit variable is divided into 8 4-bit nibbles: the algorithm works then in 8 steps, each step processing one nibble of the 32-bit data. One of those tables converts a nibble from arithmetic to Boolean masking. The other table manages carries coming from the modular addition.

## SUMMARY OF THE INVENTION

The object of the invention is to propose an alternative conversion "Arithmetic to Boolean" algorithm using only one pre-computed table, which has proven to be foolproof against DPA attacks.

The invention concerns a method for securing and protecting sensitive information within a device comprising a processor and a memory, and a cryptographic algorithm stored in the further memory. The cryptographic algorithm is implemented to protect sensitive information handled by the device. Boolean and arithmetic masking are utilized to protect the sensitive information.

The present invention is defined, in its broadest sense, as a countermeasure method against attacks of the DPA type, wherein said method comprises the following steps:

- using an arithmetic masking and a Boolean masking consisting in preventing statistical analysis of recordings of the current consumption caused by processing of operations during software running,
- splitting the data to be converted into nibbles of size k,
- performing a conversion, from said arithmetic masking into said Boolean masking for integers having a size greater than k-bits, by using a first table which converts a nibble from arithmetic to Boolean masking and a second table which manages carries coming from the modular addition, said method being **characterized in that**
- the conversion step is performed with one pre-computed table T combining the first table and the second carry table,
- said table T being configured so that to convert from arithmetic to Boolean masking k-bit nibble by k-bit nibble for integers having a size greater than k bits while adding a masked carry from the modular addition to the nibble.

The method according to the invention may include additional characteristics considered separately or combined, and notably:

- In an embodiment, said countermeasure method comprises the following steps:
- using data x to be protected, x of size m bits, with the masked data being noted x', with $x = x' + r$ modulo m, the integer r being a random integer,
- obtaining a value A such that $x = A \oplus r$, where $\oplus$ means the exclusive or,
- the masked data x' is split into n nibbles of size k $x'_{n-1}||...||x'_i||...||x'_0$ and for each input $x'_i$, the table T outputs the converted nibble $x'_i$ and the carry value masked.
- In another embodiment, for each nibble the carry value is masked with the addition of a random $\eta$ of size nxk where n is the number of nibbles.
- In another embodiment, the masked carry is added to the nibble before its conversion from arithmetic to Boolean masking.
- In another embodiment, the carry value is masked by exclusive or with a random bit.

The present invention also relates to a portable electronic device comprising means to perform the countermeasure method of the present invention. Said portable electronic device can be a smart card or a cryptographic token.

The present invention also relates to a secret key encryption method using the countermeasure method of the present invention.

## BIBLIOGRAPHY

Reference to the following publications will provide a more thorough understanding of the prior art.

[1] Paul Kocher, Joshua Jaffe and Benjamin Jun, "Differential Power Analysis," in Proceedings of Advances in Cryptology--CRYPTO '99, Springer-Verlag, 1999, pp. 388-397.

[2] Suresh Chari, Charantjit S. Jutla, Josyula R. Rao and Pankaj Rohatgi, "Towards Sound Approaches to Counteract Power-Analysis Attacks," in Proceedings of Advances in Cryptology--CRYPTO '99, Springer-Verlag, 1999, pp. 398-412.

[3] Louis Goubin and Jacques Patarin, "DES and Differential Power Analysis--The Duplication Method," in Proceedings of Workshop on Cryptographic Hardware and Embedded Systems, Springer-Verlag, August 1999, pp. 158-172.

[4] Louis Goubin "A Sound Method for Switching between Boolean and Arithmetic Masking" CHES'01, Springer LNCS 2162/2001, pp. 3-15.

[5] Jean-Sébastien Coron and Alexei Tchulkine "A New Algorithm for Switching from Arithmetic to Boolean Masking", CHES'03, Springer LNCS 2779/2003, pp. 89-97.

## DETAILED DESCRIPTION OF THE EMBODIMENTS OF THE INVENTION

"Differential Power Analysis" (DPA) is an attack that makes it possible to obtain information on the secret key (contained in a smart card or cryptographic token, for example), by exploring characteristic behaviors of transistor logic gates and software running in smart cards and other cryptographic devices and performing a statistical analysis of recordings of electric power consumption measured over a large number of calculations with the same key.

This attack does not require any knowledge of the individual power consumption of each instruction, or of the position of each of these instructions in time. It is applied in exactly the same way as soon as the attacker knows the inputs or outputs of the algorithm and the corresponding consumption curves. It is based solely on the following fundamental hypothesis that there is an intermediate variable, appearing during the calculation of the algorithm, such that the knowledge of a few bits of the key, (in practice less than 32 bits) makes it possible to decide with which probability two inputs, (or respectively two outputs), give the same intermediate value for this variable.

The present invention uses the principle of "masking" method to program the algorithm so that the above fundamental hypothesis on which DPA is based is no longer verified (i.e., no intermediate variable ever depends on the knowledge of a subset of the secret key).

For algorithms that combine Boolean functions and arithmetic functions, two kinds of masking are used:

A Boolean masking: $x'=x \oplus r$, where $\oplus$ means the exclusive or.

An arithmetic masking: $x'=x-r$ modulo $2^k$.
where x is an intermediate data, r a random value used to obtain the masked value x', and these three data have size k.

The purpose of the present invention is to find an effective algorithm for switching from the arithmetic masking to the Boolean masking, while making sure that the intermediate variables are de-correlated from the data to be masked, which ensures DPA resistance.

The method of the present invention is based on the use of one pre-computed table generated during the pre-computation phase of the cryptographic algorithm. The data to be converted is split into nibbles of size k, where k has in practice size 4,5,6,7 or 8. For example if k = 4, a 32-bit variable is divided into 8, 4-bit nibbles: the algorithm works then in 8 steps, each step processing one nibble of the 32-bit data. Each nibble is a part of the data masked arithmetically. In order to have one table instead of two, the table must have the two following functions at the same time:

● The update of the nibble in the new masking mode. Indeed, each nibble is a part of the data masked arithmetically: the nibble $x_i = s - r \bmod 2^k$, where s is the corresponding nibble of the secret data, and r the corresponding nibble of the mask. Thus the table is used to convert $x_i$ into the value $x_i' = s \oplus r$, where $\oplus$ is the exclusive or.
● The management of carries. Let us consider a masked data x split into n nibbles $x_{n-1}||...||x_i||...||x_0$, where || means concatenation. Each converted nibble $x_i'$ is equal to $(x_i +r) \oplus r \bmod 2^k$, but the value $x_i = x_i'+r$ can be possibly more than $2^k$. In this case the carry must be added to the nibble $x_{i+1}$ before its conversion. As the carry value is not de-correlated from the secret data, it must be masked.

The use of one table instead of two is clearly an advantage in terms of performance. Indeed, the time of generation of a second table and of a call to this second table is avoided during the conversion phase. In order to have to pre-compute one table instead of two, it is necessary to use new techniques allowing to the single table to take into account at the same time an update of the nibble and the carry management. These techniques are detailed in first and second embodiment of the invention.

First embodiment: 32-bit processor

In a first embodiment, the method of the present invention is particularly suitable for 32-bit architectures. The present method for switching from arithmetic to Boolean masking uses one pre-computed table, and manipulates data mostly of the size of the intermediate variables of the algorithm. As this size is typically 32 bits, this method is then especially suitable for the implementations of the following algorithms on 32-bit architectures: hash functions of the SHA-1 family, finalist Blake of the SHA-3 competition, all software oriented finalists of the eSTREAM stream cipher competition, other stream ciphers like Snow 2.0 and Snow 3G...

The principle of this method relies on one pre-computed table T of size $\frac{n.k}{8} \times 2^k$ bytes where k is the size of the processed nibble.

The table T is described as follows:

| Table T generation |
|---|
| 1.        Generate a random $k$-bit $r$ and a random $(n \cdot k)$-bit $\eta$ |
| 2.        For $A = 0$ to $2^k$ - 1 do <br>          $T[A] = ((A + r) \oplus r) + \eta \bmod 2^{n \cdot k}$ |
| 3.        Output $T$, $r$ and $\eta$ |

The table T of the invention converts a nibble from arithmetic to Boolean masking while managing carries coming from the modular addition.

Let us consider a masked data x' split into n nibbles $x'_{n-1} ||...||x'_i||...||x'_0|$. Here to manage the carry in a secure way, for each input $x'_i$, the table T outputs the carry value masked by the addition of a random $\eta$ of size n×k.

The conversion phase can be described by the following algorithm:

| *Conversion of a n · k-bit variable:* | |
|---|---|
| Input : | $(A, R)$ such that $x = A + R$ mod $2^{n·k}$ |
| | and $r$, $\eta$ generated during precomputation phase |
| 1. | For $i = 0$ to $n - 1$ do |
| 2. | Split $A$ into $A_h \| A_l$ and $R$ into $R_h \| R_l$ such that $A_l$ and $R_l$ have size $k$ |
| 3. | $A \leftarrow A - r$ mod $2^{(n-i)·k}$ |
| 4. | $A \leftarrow A + R_l$ mod $2^{(n-i)·k}$ |
| 5. | $A \leftarrow A_h \| 0 + T[A_l]$ mod $2^{n·k}$ |
| 6. | $A \leftarrow A - \eta$ mod $2^{n·k}$ |
| 7. | $x'_i \leftarrow A_l \oplus R_l$ |
| 8. | $x'_i \leftarrow A_l \oplus r$ |
| 9. | $A \leftarrow A_h$ and $R \leftarrow R_h$ |
| 10. | Output $x' = x'_0 \| ... \| x'_i \| ... \| x'_{n-1}$ |

Here the carry can be directly taken into account by the table T because, as the outputs of T have the same size as the processed data (n.k bits), if the value A+r is greater than $2^k$ during the pre-computation of T, the (k+1)th least significant bit of T[A] is then automatically set to 1 before being masked by the addition of $\eta$. During the conversion algorithm, the carry is added to the current variable (line 5) at the same time as the nibble $A_l$ is replaced.

Each processed intermediate variable is completely de-correlated from the secret data, as the output of the table T has no dependence on the value of the carry. Indeed, the random value $\eta$ has the same size as the variable A avoiding any dependence of T's outputs on the value of the carries. Thus the method disclosed in this first embodiment is resistant against first order DPA.

The method proposed in this first embodiment is also appropriate for a 16-bit processor with an algorithm manipulating 16-bit data (like the block cipher IDEA).

In a variant of the first embodiment, the execution time of the conversion algorithm can be reduced by moving some instructions out of the loop. In an example, three of them can be removed from the loop without weakening security:

- The arithmetic masking with the random r (line 3) can be performed before the loop.
- The subtraction of the value $\eta$ (line 6) can be performed before the loop.
- The Boolean unmasking with the random r (line 8) can be performed after the loop.

Indeed, in the case these instructions are moved out of the loop, all nibbles of A but one remain masked with the initial mask R during the execution of the algorithm, and the lasting nibble is masked by the random value r. All intermediate variables are then randomly distributed throughout the execution.

In order to move these instructions out of the loop, some extra calculations must be performed during pre-computation step. The improved version of the method is then as follows:

The table T can be described as follows:

| *Table T generation* | |
|---|---|
| 1. | Generate a random *k*-bit $r$ and a random $((n - 1) · k)$-bit $\eta$ |
| 2. | $\text{Compute } E = \sum_{i=1}^{k-1} 2^{i·k} \cdot \eta \bmod 2^{n·k}$ |
| 2. | For $A = 0$ to $2^k - 1$ do |
| | $T[A] = ((A + r) \oplus r) + 2^k \cdot \eta$ mod $2^{n·k}$ |
| 3. | Output $T$. $r$ and $E$ |

The conversion phase can be described by the following algorithm:

| Conversion of a $n \cdot k$-bit variable : | |
|---|---|
| Input : | $(A, R)$ such that $r = A + R$ mod $2^{n\,k}$ |
| | and $r$, $E$ generated during precomputation phase |
| 1. | $A \leftarrow A - r\|...\|r\|...\|r$ mod $2^{n\,k}$ |
| 1. | $A \leftarrow A - E$ mod $2^{n\,k}$ |
| 2. | For $i = 0$ to $n - 1$ do |
| 3. | Split $A$ into $A_h\|A_l$ and $R$ into $R_h\|R_l$ such that $A_l$ and $R_l$ have size $k$ |
| 4. | $A \leftarrow A + R_l$ mod $2^{(n-i)\,k}$ |
| 5. | $A \leftarrow A_h\|0 + T[A_l]$ mod $2^{n\,h}$ |
| 7. | $\leftarrow A + R_l$ |
| 8. | $A \leftarrow A_h$ and $R \leftarrow R_h$ |
| 9. | Output $x' = x'_0\|...\|x'_1\|x'_{n-1} \oplus r\|...\|r\|...\|r$ |

## Second embodiment: 16-bit processor or 8-bit processor:

For a 16-bit or an 8-bit processor, the drawback of the method proposed in the first embodiment is the fact that the size of the manipulated data is the same as the size of the intermediate data of the algorithm. As seen in this first embodiment, the typical size for intermediate data is 32 bits. The time of the conversion algorithm is then multiplied by 2 for a 16-bit processor and by 4 for an 8-bit processor. In this second embodiment, it is proposed a method that is more appropriate for processors whose register has size smaller than 32.

## Principle:

A known principle is to treat masked information as memory address by using a pre-computed table keeping data masked during algorithm execution. The idea is to treat a masked 1-bit information as a memory address information. As a carry bit is a 1-bit information, the purpose of this second embodiment is to apply this principle to the carry.

Let us suppose that instead of being masked arithmetically as it was proposed in the first embodiment, carries are protected by Boolean masks. The protection comes then to adding by exclusive or a random bit to the carry value.

If we call $\rho$ such a random bit, a 2-entry table C can be generated during pre-computed step by the following way:

| Table C generation | |
|---|---|
| 1. | Generate a random bit $\rho$ and a random $(n \cdot k)$-bit value $\gamma$ |
| 2. | $C[\rho] = \gamma$ |
| 3. | $C[\rho \oplus 1] = \gamma + 1$ mod $2^{n \cdot k}$ |
| 4. | Output $C$ and $\gamma$. |

Now let us suppose that a carry c, protected by the Boolean mask $\rho$, is manipulated during the conversion algorithm. Thus the masked value $b = c \oplus \rho$ can be used the following way to add the carry c to the value $A_h$ in a secure way:

| Carry addition | |
|---|---|
| Inputs : | - a value $A_h$ (masked arithmetically), |
| | - a carry bit $b$ (masked in a. Boolean way) |
| | - $C$, $\gamma$ generated during precomputation phase |
| 1. | $A_h = A_h + C[b]$ mod $2^{n \cdot k}$ |
| 2. | $A_h = A_h - \gamma$ mod $2^{n \cdot k}$ |
| 4. | Output $A_h$ |

Whatever the value of p, the value C[b] is equal to the carry c added to $\gamma$ modulo $2^{n.k}$. Moreover, all processed intermediate variables are randomly distributed; they are then all completely de-correlated from the values of the carries, so that the method disclosed in this second embodiment is resistant against first order DPA:

Table T generation:

In this embodiment, it is proposed an algorithm for switching from arithmetic to Boolean masking based on the principle previously described. As for the first embodiment, the idea is to use only one pre-computed table to maximize time performance. For that, the output of the table T must contain information about the new masked nibble and the carry bit.

In this second embodiment, the pre-computed table T has the following properties:

- The carry value is masked by exclusive or with a random bit,
- During conversion phase, the choice of the address in the table not only depends on the value of the nibble but also on the value of the previous carry. This implies T has a size of $2^{k+1}$.

| Table T generation |
|---|
| 1.      Generate a random $k$-bit $r$ and a random bit $\rho$ |
| 2.      Compute $B_0 = \rho \times 2^k$ and $B_1 = (\rho \oplus 1) \times 2^k$ |
| 3.                  For $A = 0$ to $2^k - 1$ do |
|                  $T[A + B_0] = (A + r) \oplus \rho\|r$ |
|                  $T[A + B_1] = (A + r + 1) \oplus \rho\|r$ |
| 4.      Output $T$, $r$ and $\rho$ |

The conversion step is then as follows:

| Conversion of a $n \cdot k$-bit variable : |
|---|
| Input :                 $(A, R)$ such that $x = A + R \bmod 2^{n \cdot k}$, |
|                          $r$, $\rho$ generated during precomputation phase and a one-bit variable $\beta$ |
| 1.      $A \leftarrow A - r\|...\|r\|...\|r\|r \bmod 2^{n \cdot k}$ |
| 2.      $\beta \leftarrow \rho$ |
| 3.      For $i = 1$ to $n$ do |
| 4.              Split $A$ into $A_h\|A_l$ and $R$ into $R_h\|R_l$ such that $A_l$ and $R_l$ have size $k$ |
| 5.              $A \leftarrow A + R_l \bmod 2^{(n-i) \cdot k}$ |
| 6.              Split $T[A_l + (\beta \cdot 2^k)]$ into $\beta\|D$ such that $D$ have size $k$ |
| 7.                      $x'_i \leftarrow D \oplus R_l$ |
| 8.              $A \leftarrow A_h$ and $R \leftarrow R_h$ |
| 9.      Output $x' = x'_0 \|...\|x'_i\|...\|x'_{n-1} \oplus r\|...\|r\|...\|r$ |

Here again, all processed variable are randomly distributed, inducing resistance of the algorithm against first order DPA.

If $k = 8$, the time of the conversion phase is optimized. But in this case the size of the output data of the table is $k+1 = 9$ bits. This implies that this data needs two bytes to be stored, and the size of the table in RAM is then 1024 bytes. This amount of memory is possible today on many embedded components, but still could be too large in some cases.

It is possible to reduce it by half by noticing that the Boolean masking of a secret data $x'_b = x \oplus r$ and the arithmetic masking of the same data $x'_a = x - r \bmod 2^k$ have always the same least significant bit. Thus it is not necessary to store the least significant bit of $(A + r) \oplus \rho\|r$ or of $(A + r + 1) \oplus \rho\|r$. The resulting algorithm is then slightly slower but the needed amount of memory is reduced to 512 bytes.

**Claims**

**1.** A countermeasure method against attacks of the DPA type, wherein said method comprises the following steps:

- using an arithmetic masking and a Boolean masking consisting in preventing statistical analysis of recordings of the current consumption caused by processing of operations during software running,
- splitting the data to be converted into nibbles of size k,
- performing a conversion, from said arithmetic masking into said Boolean masking for integers having a size greater than k-bits, by using a first table which converts a nibble from arithmetic to Boolean masking and a second table which manages carries coming from the modular addition, said method being **characterized in that**
- the conversion step is performed with one pre-computed table T combining the first table and the second carry table,
- said table T being configured so that to convert from arithmetic to Boolean masking k-bit nibble by k-bit nibble for integers having a size greater than k bits while adding a masked carry from the modular addition to the nibble.

2. A countermeasure method according to the previous claim, wherein it comprises the following steps:

   - using data x to be protected, x of size m bits, with the masked data being noted x', with $x = x' + r$ modulo m, the integer r being a random integer,
   - obtaining a value A such that $x = A \oplus r$, where $\oplus$ means the exclusive or,
   - the masked data x' is split into n nibbles of size k $x'_{n-1}\|...\|x'_i\|...\|x'_0$ and for each input $x'_i$, the table T outputs the converted nibble $x'_i$ and the carry value masked.

3. A countermeasure method according to any previous claim, wherein for each nibble the carry value is masked with the addition of a random $\eta$ of size nxk where n is the number of nibbles.

4. A countermeasure method according to the previous claim, wherein the masked carry is added to the nibble before its conversion from arithmetic to Boolean masking.

5.

   A countermeasure method according to the claims 3 and 4, wherein the size of the table T is $\frac{n.k}{8}$ x$2^k$ bytes where k is the size of the processed nibble and wherein said table T is described as follows:

| Table T generation |
| --- |
| 1.      Generate a random k-bit r and a random $(n \cdot k)$-bit $\eta$ |
| 2.      For $A = 0$ to $2^k - 1$ do |
|         $T[A] = ((A + r) \oplus r) + \eta$ mod $2^{n \cdot k}$ |
| 3.      Output $T$, $r$ and $\eta$ |

6. A countermeasure method according to the previous claim, wherein the conversion from said arithmetic masking into said Boolean masking for integers having a size greater than k-bits comprises the following steps:

| Conversion of a $n \cdot k$-bit variable : | | |
| --- | --- | --- |
| Input : | $(A, R)$ such that $x = A + R$ mod $2^{n \cdot k}$ | |
| | and $r$, $\gamma$ generated during precomputation phase | |
| 1. | For $i = 0$ to $n - 1$ do | |
| 2. | Split A into $A_h\|A_l$ and R into $R_h\|R_l$ such that $A_l$ and $R_l$ have size k | |
| 3. | $A \leftarrow A - r$ mod $2^{(n-i) \cdot k}$ | |
| 4. | $A \leftarrow A + R_l$ mod $2^{(n-i) \cdot k}$ | |
| 5. | $A \leftarrow A_h\|0 + T[A_l]$ mod $2^{n \cdot k}$ | |
| 6. | $A \leftarrow A - \eta$ mod $2^{n \cdot k}$ | |
| 7. | $x'_i \leftarrow A_l \oplus R_l$ | |
| 8. | $$x'_i \leftarrow A_l \oplus r$$ | |
| 9. | $A \leftarrow A_h$ and $R \leftarrow R_h$ | |
| 10. | Output $x' = x'_0\|...\|x'_i\|...\|x'_{n-1}$ | |

**7.** A countermeasure method according to claims 3 and 4, wherein the size of the table T is $\frac{n.k}{8}$ bytes where k is the size of the processed nibble and wherein said table T is described as follows:

| Table T generation |
| --- |
| 1. Generate a random $k$-bit $r$ and a random $((n-1) \cdot k)$-bit. $\eta$ |
| 2. Compute $E = \sum_{i=1}^{k-1} 2^{i \cdot k} \cdot \eta \mod 2^{n \cdot k}$ |
| 2. For $A = 0$ to $2^k - 1$ do |
| $T[A] = ((A + r) \oplus r) + 2^k \cdot \eta \mod 2^{n \cdot k}$ |
| 3. Output $T$, $r$ and $E$ |

**8.** A countermeasure method according to the previous claim, wherein the conversion from said arithmetic masking into said Boolean masking for integers having a size greater than K bits comprises the following steps:

| Conversion of a $n \cdot k$-bit variable : |
| --- |
| Input : $(A, R)$ such that $x = A + R \mod 2^{n \cdot k}$ |
| and $r, E$ generated during precomputation phase |
| 1. $A \leftarrow A - r\|...\|r\|...\|r \mod 2^{n \cdot k}$ |
| 1. $A \leftarrow A - E \mod 2^{n \cdot k}$ |
| 2. For $i = 0$ to $n - 1$ do |
| 3. Split $A$ into $A_h\|A_l$ and $R$ into $R_h\|R_l$ such that $A_l$, and $R_l$ have size $k$ |
| 4. $A \leftarrow A + R_l \mod 2^{(n-i) \cdot k}$ |
| 5. $A \leftarrow A_h\|0 + T[A_l] \mod 2^{n \cdot k}$ |
| 7. $x'_i \leftarrow A_l \oplus R_l$ |
| 8. $A \leftarrow A_h$ and $R \leftarrow R_h$ |
| 9. Output $x' = x'_0\|...\|x'_i\|...\|x'_{n-1} \oplus r\|...\|r\|...\|r$ |

**9.** A countermeasure method according to the claims 1 or 2, wherein the carry value is masked by exclusive or with a random bit.

**10.** A countermeasure method according to claims 2 and 9, wherein the size of the table T is $2^{k+1}$ bytes where k is the size of the processed nibble and wherein said table T is described as follows:

| Table T generation |
| --- |
| 1. Generate a random $k$-bit $r$ and a random bit $\rho$ |
| 2. Compute $B_0 = \rho \times 2^k$ and $B_1 = (\rho \oplus 1) \times 2^k$ |
| 3. For $A = 0$ to $2^k - 1$ do |
| $T[A + B_0] = (A + r) \oplus \rho\|r$ |
| $T[A + B_1] = (A + r + 1) \oplus \rho\|r$ |
| 4. Output $T$, $r$ and $\rho$ |

**11.** A countermeasure method according to the previous claim, wherein the conversion from said arithmetic masking into said Boolean masking for integers having a size greater than k-bits comprises the following steps:

| *Conversion of a n · k-bit variable :* |
|---|
| Input :          $(A. R)$ such that $r = A + R$ mod $2^{n \cdot k}$ <br> $r, \rho$ generated during precomputation phase and a one-bit variable $\beta$ <br> $A \leftarrow A - r\|...\|r\|...\|r\|r$ mod $2^{nk}$ <br> $\beta \leftarrow \rho$ <br> For $i = 1$ to $n$ do <br>          Split $A$ into $A_h\|A_l$ and $R$ into $R_h\|R_l$ such that $A_l$ and $R_l$ have size $k$ <br>          $A \leftarrow A + R_l$ mod $2^{(n \cdot i)k}$ <br>          Split $T[A_l + (\beta \cdot 2^k)]$ into $\beta\|D$ such that $D$ have size $k$ <br>          $x'_i \leftarrow D \oplus R_l$ <br>          $A \leftarrow A_h$ and $R \leftarrow R_h$ <br> Output $x' = x'_0\|...\|x'_i\|...\|x'_{n-1} \oplus r\|...\|r\|...\|r$ |

12. A secret key encryption method, **characterized in that** it uses any one of the preceding claims.

13. A portable electronic device comprising means to perform said countermeasure method according to any one of the preceding claims.

14. A portable electronic device according to the previous claim, wherein said portable is a smart card or a cryptographic token.

**Europäisches Patentamt**

**European Patent Office**

**Office européen des brevets**

# EUROPEAN SEARCH REPORT

**Application Number**

EP 12 30 5258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/024606 A1 (GIESECKE & DEVRIENT GMBH [DE]; NEISSE OLAF [DE]; PULKUS JUERGEN [DE]) 17 March 2005 (2005-03-17) | 1-4,9, 12,13 | INV. H04L9/00 |
| A | * page 10, line 10 - page 18, line 27 * | 5-8,10, 11 | |
| | ----- | | |
| X | EP 1 553 490 A2 (SAMSUNG ELECTRONICS CO LTD [KR]) 13 July 2005 (2005-07-13) | 1-4,9, 12-14 | |
| A | * paragraph [0008] - paragraph [0012] * <br> * paragraph [0028] - paragraph [0041] * <br> ----- | 5-8,10, 11 | |

**TECHNICAL FIELDS SEARCHED (IPC)**

H04L

The present search report has been drawn up for all claims

| Place of search | Date of completion of the search | Examiner |
|---|---|---|
| Munich | 31 July 2012 | Bec, Thierry |

EPO FORM 1503 03.82 (P04C01)

# EP 2 634 953 A1

ANNEX TO THE EUROPEAN SEARCH REPORT
ON EUROPEAN PATENT APPLICATION NO.

EP 12 30 5258

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2012

| Patent document cited in search report | | Publication date | Patent family member(s) | | Publication date |
|---|---|---|---|---|---|
| WO 2005024606 | A1 | 17-03-2005 | AT | 384302 T | 15-02-2008 |
| | | | DE | 10341096 A1 | 31-03-2005 |
| | | | EP | 1664979 A1 | 07-06-2006 |
| | | | ES | 2299857 T3 | 01-06-2008 |
| | | | US | 2007058800 A1 | 15-03-2007 |
| | | | WO | 2005024606 A1 | 17-03-2005 |
| EP 1553490 | A2 | 13-07-2005 | CN | 1648967 A | 03-08-2005 |
| | | | EP | 1553490 A2 | 13-07-2005 |
| | | | KR | 20050072537 A | 12-07-2005 |
| | | | US | 2005147243 A1 | 07-07-2005 |

EPO FORM P0459

## REFERENCES CITED IN THE DESCRIPTION

### Patent documents cited in the description

- US 7334133 B

- EP 1348275 A

### Non-patent literature cited in the description

- Differential Power Analysis. **PAUL KOCHER ; JOSHUA JAFFE ; BENJAMIN JUN.** Proceedings of Advances in Cryptology--CRYPTO '99. Springer-Verlag, 1999, 388-397
- Towards Sound Approaches to Counteract Power-Analysis Attacks. **SURESH CHARI ; CHARANTJIT S. JUTLA ; JOSYULA R. RAO ; PANKAJ ROHATGI.** Proceedings of Advances in Cryptology--CRYPTO '99. Springer-Verlag, 1999, 398-412

- DES and Differential Power Analysis--The Duplication Method. **LOUIS GOUBIN ; JACQUES PATARIN.** Proceedings of Workshop on Cryptographic Hardware and Embedded Systems. Springer-Verlag, August 1999, 158-172
- A Sound Method for Switching between Boolean and Arithmetic Masking. **LOUIS GOUBIN.** CHES'01. Springer, 2001, 3-15
- A New Algorithm for Switching from Arithmetic to Boolean Masking. **JEAN-SÉBASTIEN CORON ; ALEXEI TCHULKINE.** CHES'03. Springer, 2003, 89-97